# FASCICULE DE BREVET EUROPEEN

(11) **EP 2 667 155 B1**
(45) Date de publication et mention de la délivrance du brevet: **13.11.2019**
(21) Numéro de dépôt: 13168614.9
(22) Date de dépôt: 21.05.2013
(51) Int. Cl.: G01C 19/5691

(54) **Centrale inertielle à gyroscopes vibrants montés sur un carrousel et procédé de mesure angulaire**
Trägheitsnavigationssystem mit schwingenden Navigationskreiseln, die auf ein Karussell montiert sind, und Winkelmessverfahren
Inertial unit with vibratory gyroscopes mounted on a carousel and angle measuring method

(30) Priorité: 24.05.2012 FR 1201487
(43) Date de publication de la demande: 27.11.2013
(73) Titulaire: Safran Electronics & Defense, 92100 Boulogne-Billancourt (FR)
(72) Inventeur: RENAULT, Alain, 92100 BOULOGNE-BILLANCOURT (FR); LIGNON, Christian, 92100 BOULOGNE-BILLANCOURT (FR); BRUNSTEIN, Etienne, 92100 BOULOGNE-BILLANCOURT (FR)
(74) Mandataire: Lavialle, Bruno François Stéphane

(56) Documents cités:
- FR-A1- 2 920 224
- US-A1- 2010 063 763
- SHKEL A M: "Type I and Type II Micromachined Vibratory Gyroscopes", POSITION, LOCATION, AND NAVIGATION SYMPOSIUM, 2006 IEEE/ION CORONADO, CA APRIL 25-27, 2006, PISCATAWAY, NJ, USA,IEEE, 25 avril 2006 (2006-04-25), pages 586-593, XP010924976, DOI: 10.1109/PLANS.2006.1650648 ISBN: 978-0-7803-9454-4

## Description

La présente invention concerne une centrale inertielle destinée à être montée sur un véhicule. Le véhicule peut être un véhicule terrestre, un aéronef, un navire, dont la navigation nécessite la connaissance de la position, de la vitesse et de l'attitude (cap, roulis et tangage). L'invention concerne également un procédé de mesure angulaire.

Une centrale de navigation inertielle moderne comprend généralement un cœur inertiel. Le cœur inertiel comprend des capteurs inertiels tels que des gyroscopes et des accéléromètres disposés selon les axes du repère de mesure. Les gyroscopes mesurent des rotations angulaires du repère de mesure par rapport à un référentiel géographique et fournissent l'attitude du véhicule dans le référentiel géographique. Les accéléromètres mesurent des accélérations qui sont projetées dans le référentiel géographique puis intégrées une première fois pour fournir la vitesse, puis une seconde fois pour fournir la position. La précision d'une centrale de navigation inertielle dépend directement des erreurs des capteurs inertiels, et plus précisément de la projection de ces erreurs dans le repère géographique local et, dans le cas d'une navigation inertielle de longue durée, les erreurs de position dépendent de manière prépondérante de la précision des gyroscopes. La précision des gyroscopes est affectée par les erreurs de dérive (décalage à l'origine de la mesure, une grandeur nulle n'est alors pas mesurée à zéro), de facteurs d'échelle (l'erreur de facteur d'échelle est l'erreur sur le coefficient multiplicateur de la mesure), et de calage d'axes (erreur d'orthogonalité entre les axes de mesure).

Dans les cœurs inertiels, il est notamment connu d'utiliser des gyroscopes à résonateur vibrant. Les gyroscopes vibrants sont axisymétriques à effet Coriolis (CVG pour « Coriolis Vibratory Gyroscopes »), par exemple à résonateur hémisphérique (GRH ou HRG pour « Hemispherical Resonator Gyroscopes »), et sont plus généralement dits de type I comme dans le document « Type I and Type II micromachined vibratory gyroscopes » de Andrei M. Shkel, pages 586-593, IEEE/ION (pour « Institute of Electrical and Electronics Engineers/ Institute Of Navigation ») PLANS 2006, San Diego, CA, USA. Ces gyroscopes fonctionnent soit en boucle ouverte, et ils permettent alors de mesurer un angle de rotation absolu sur la base d'une mesure d'un angle représentant la position de la vibration du résonateur par rapport à des électrodes de mesure (angle électrique), soit en boucle fermée et ils permettent alors de mesurer une vitesse de rotation sur la base d'une mesure d'un courant nécessaire au maintien de l'angle électrique à une valeur donnée. Les mesures fournies par ces gyroscopes vibrants peuvent être entachées d'erreurs qui sont essentiellement fonction de la position de la vibration par rapport aux électrodes de mesure. Ces erreurs sont donc variables en fonction de la position de vibration représentée par l'angle électrique.

Pour améliorer la précision de ces centrales inertielles, il est courant d'utiliser des gyroscopes présentant de meilleures performances. Toutefois, de tels gyroscopes sont relativement coûteux.

Il est connu des documents US-A-2010/063763 et FR-A-2920224 d'améliorer les performances des centrales inertielles respectivement en utilisant un quatrième gyroscope et en jouant sur la commande de précession.

Un but de l'invention est de fournir un moyen permettant d'améliorer la précision des centrales inertielles pour un coût contenu.

A cet effet, on prévoit, selon l'invention, une centrale inertielle comportant un cœur inertiel qui est relié à une unité de commande et qui comporte trois gyroscopes montés relativement les uns aux autres pour avoir des axes sensibles sensiblement perpendiculaires les uns aux autres, les gyroscopes étant des gyroscopes axisymétriques vibrant à résonateur hémisphérique. Le cœur est monté sur un carrousel agencé pour entraîner en rotation le cœur inertiel autour d'un axe de pivotement à au moins une fréquence de rotation prédéterminée.

Ainsi, la vibration associée au gyroscope sensiblement orienté suivant l'axe de pivotement tourne du fait du pivotement du cœur inertiel. Comme les dérives sont principalement des fonctions sinusoïdales de l'angle électrique (ou d'un de ses multiples), il est possible d'éliminer, au cours du pivotement, une grande partie de l'erreur de dérive du gyroscope orienté suivant l'axe du pivotement. Ceci permet d'améliorer les performances des centrales inertielles pour un coût relativement faible, ce qui est particulièrement intéressant avec les centrales inertielles à bas coûts.

De même, les angles électriques des gyroscopes sensiblement orientés perpendiculairement à l'axe de pivotement ne vont pas être affectés par la rotation et donc les dérives de ces gyroscopes ne vont pas évoluer dans le repère de mesure. En revanche, du fait du pivotement, la projection des dérives desdits gyroscopes dans un repère géographique terrestre va présenter un minimum de densité spectrale à la fréquence de rotation autour de l'axe de pivot.

Le pivotement physique des gyroscopes permet ainsi un moyennage des défauts sur chacun des axes du repère gyroscopique sans affecter les paramètres internes de fonctionnement des gyromètres.

Cette méthode est également étendue au cas où le positionnement des axes des gyroscopes est quelconque par rapport à l'axe de rotation. Dans ce cas, les dérives de chacun des gyroscopes évolueront sinusoïdalement à une fréquence dépendant de l'angle entre l'axe de mesure des dits gyroscopes par rapport à l'axe de pivotement. Le moyennage de la projection des dérives de chacun des gyroscopes suivant l'axe de pivotement se produira à la fréquence correspondant à une révolution de leurs angles électriques respectifs. Le moyennage de la dérive de chacun des gyroscopes suivant le plan perpendiculaire à l'axe de pivotement se produira à une fréquence à la fois sous-multiple des fréquences d'évolution des angles électriques de chacun des gyroscopes et sous-multiple de la fréquence de l'axe de pivotement.

L'invention a également pour objet un procédé de mesure angulaire au moyen d'une centrale inertielle conforme à l'invention, le procédé comprenant les étapes de :
- faire pivoter le carrousel autour de l'axe de pivotement,
- effectuer des mesures avec chaque gyroscope pendant le pivotement du carrousel.

D'autres caractéristiques et avantages de l'invention ressortiront à la lecture de la description qui suit d'un mode de réalisation particulier non limitatif de l'invention.

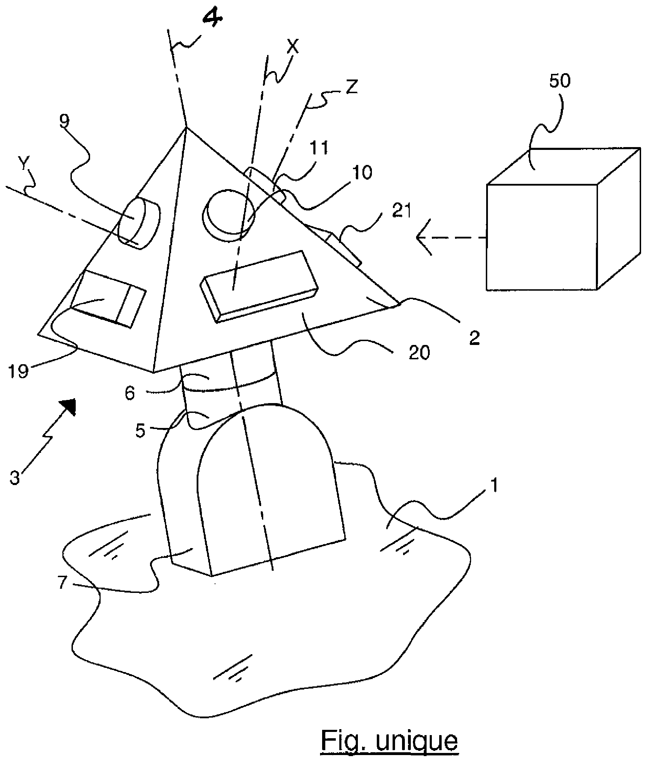

Il sera fait référence à la figure unique annexée représentant schématiquement et en perspective une centrale inertielle conforme à l'invention.

En référence à la figure, la centrale inertielle de l'invention comprend une plateforme 1 permettant la fixation de la centrale inertielle à un véhicule tel qu'un navire ou un aéronef. La plateforme 1 supporte un carrousel 2 portant un cœur inertiel 3 auquel est associé un repère ayant trois axes X, Y, Z. La centrale inertielle est agencée pour déterminer l'orientation de ce repère par rapport à trois axes d'un repère inertiel fixe dont l'origine est indifférente, par exemple ici le centre de la terre. Deux des axes du référentiel inertiel sont orientés dans un plan sensiblement horizontal, et le dernier axe est orienté sensiblement selon la verticale vers le haut.

Le cœur inertiel 3 comprend trois gyroscopes 9, 10, 11 et trois accéléromètres 19, 20, 21. Les gyroscopes 9, 10, 11 sont des gyroscopes vibrants axisymétriques comportant un résonateur maintenu en vibration et permettant une mesure d'angle par détection d'une position de la vibration autour d'un axe du résonateur (angle électrique). Le résonateur est hémisphérique (gyroscope de type GRH).

L'accéléromètre 19 mesure les accélérations du cœur inertiel 3 dans la direction de l'axe Y et le gyroscope 9 les rotations du cœur inertiel 3 autour de l'axe Y. L'accéléromètre 20 mesure les accélérations du cœur inertiel 3 dans la direction de l'axe X et le gyroscope 10 les rotations du cœur inertiel 3 autour de l'axe X. L'accéléromètre 21 mesure les accélérations du cœur inertiel 3 dans la direction de l'axe Z et le gyroscope 11 les rotations du cœur inertiel 3 autour de l'axe Z. Il est alors possible de calculer des accélérations du véhicule selon les axes du référentiel inertiel, par déduction des accélérations mesurées puis, par intégration, la vitesse et, par double intégration, la position du véhicule dans le référentiel inertiel.

Le carrousel 2 est monté sur la plateforme 1 pour pivoter autour d'un axe de pivotement 4. A cette fin, le carrousel 2 est solidaire d'une broche suspendue sur des paliers magnétiques pour limiter les frottements. Un moteur 5 permet de faire tourner le carrousel 2. L'axe de pivotement 4 est ici distinct d'une trisectrice des axes sensibles (X, Y, Z). Plus précisément, l'axe de pivotement 4 est tel que les gyroscopes 9, 10, 11 aient des erreurs n'apparaissant pas à des fréquences identiques, les fréquences d'apparition des erreurs des gyroscopes n'étant pas des harmoniques les unes des autres.

Un codeur 6 est monté sur la plateforme 1 pour détecter la position angulaire de la broche.

Le dispositif de navigation comprend une unité de commande, schématisée en 50, programmée pour piloter le cœur inertiel 3 et mettre en œuvre le procédé de mesure de l'invention.

L'unité de commande 50 est reliée aux capteurs inertiels, au codeur 6 et au moteur 5 de pivotement du carrousel 2 pour commander ceux-ci.

L'unité de commande 50 est agencée pour animer le carrousel d'un mouvement de pivotement continu. Dans ce cas, le trièdre formé par les gyroscopes 9, 10, 11 doit présenter un défaut de facteur d'échelle le plus faible possible une fois projeté sur l'axe de pivotement 4, en particulier lorsque l'axe de pivotement 4 est vertical.

En variante, il est possible de programmer l'unité de commande 50 pour animer le carrousel d'un mouvement de rotation alterné. Un tel mouvement de rotation alterné permet d'éliminer les erreurs dues au facteur d'échelle. De ce point de vue, un mouvement de pivotement alterné est plus intéressant qu'un mouvement de pivotement continu puisqu'il ne fait pas peser de contraintes sur la qualité du facteur d'échelle du trièdre gyroscopique. En revanche, il existe un risque que le mouvement de pivotement du carrousel 2 corresponde au mouvement du véhicule porteur. Ce risque disparaît si l'on prend soin de commander un mouvement de pivotement de dynamique supérieure (par exemple au moins dans un rapport 3) à la dynamique du mouvement du porteur.

L'unité de commande 50 est également programmée pour effectuer des mesures angulaires au moyen des gyroscopes 9, 10, 11 pendant le pivotement du carrousel 2.

Le procédé mis en œuvre par l'unité de commande 50 comprend plus précisément les étapes de :
- faire pivoter le carrousel 2 autour de l'axe de pivotement 4,
- effectuer des mesures avec chaque gyroscope 9, 10, 11 pendant le pivotement du carrousel 2.

La fréquence de pivotement est choisie pour permettre un moyennage des erreurs des gyroscopes sur un horizon temporel, c'est à dire à un minimum sur la densité spectrale d'erreur des gyroscopes 9, 10, 11.

On comprend que, lors d'une phase de navigation, le pivotement du carrousel 2 permet de moyenner les erreurs des gyroscopes 9, 10, 11 dès lors que la fréquence de pivotement choisie est supérieure (par exemple dans un rapport 3) à la dynamique du porteur.

Comme l'orientation de l'axe de pivotement 4 par rapport aux gyroscopes 9, 10, 11 est choisie pour que les gyroscopes 9, 10, 11 aient des erreurs n'apparaissant pas à des fréquences identiques et que les fréquences d'apparition des erreurs des gyroscopes 9, 10, 11 ne soient pas des harmoniques les unes des autres, il est possible de réaliser une phase de calibration au cours de laquelle les gyroscopes 9, 10, 11 responsables des erreurs sont identifiés en fonction de la fréquence d'apparition de celles-ci. Il est ainsi réalisé une affectation de chaque erreur détectée au gyroscope 9, 10, 11 correspondant. Les mesures provenant de chaque gyroscope 9, 10, 11 peuvent ainsi être corrigées afin d'améliorer la précision de la centrale inertielle.

De préférence, l'axe de pivotement est orienté dans deux positions selon que l'on est en phase de calibration ou en phase de navigation.

Lors de la calibration, le véhicule peut être immobile et le carrousel 2 est positionné pour que l'axe de pivotement 4 coïncide avec un axe vertical. Les erreurs qui seraient introduites peuvent plus facilement être compensées car en théorie il ne doit pas y avoir de mouvement détecté selon le plan horizontal.

Lors de la calibration, le véhicule peut aussi être en mouvement. En effet, si ce mouvement est mesuré par un autre moyen (loch, GPS,...), il est également possible de compenser les erreurs apparaissant dans le plan horizontal.

En phase de navigation, le carrousel 2 peut être positionné pour que l'axe de pivotement soit horizontal. Cette position est avantageuse car le pivotement du carrousel 2 n'affecte alors pas la détermination du cap, ce qui rend inutile de disposer d'un codeur 6 très précis pour détecter l'angle de pivotement des gyroscopes 9, 10, 11 par rapport au véhicule.

On notera que l'opération de mesure effectuée par les gyroscopes 9, 10, 11 peut être soit continue soit répétée.

Bien entendu, l'invention n'est pas limitée aux modes de réalisation décrits mais englobe toute variante entrant dans le champ de l'invention telle que définie par les revendications.

En particulier, on pourra choisir une orientation différente de l'axe de pivotement 4. Par exemple, en phase de navigation, on peut choisir d'orienter verticalement l'axe de pivotement 4. Il sera alors préférable de compenser les erreurs de cap dues au facteur d'échelle par un autre système de navigation tel qu'un système de positionnement par satellites de type GPS. Il sera également préférable d'animer le carrousel 2 d'un mouvement de pivotement alterné.

La centrale inertielle peut ne pas comprendre d'accéléromètres par exemple pour une utilisation sur un satellite.

En variante, l'axe de pivotement 4 peut être positionné différemment par rapport aux gyroscopes et peut par exemple coïncider avec une trisectrice des axes sensibles (X, Y, Z).

L'affectation des erreurs aux gyroscopes responsables des erreurs peut être réalisée lors de la navigation.

## Revendications

1. Centrale inertielle comportant un cœur inertiel (3) qui est relié à une unité de commande (50) et qui comporte trois gyroscopes (9, 10, 11) montés relativement les uns aux autres pour avoir des axes sensibles (X, Y, Z) sensiblement perpendiculaires les uns aux autres, les gyroscopes étant des gyroscopes axisymétriques vibrant à résonateur hémisphérique, **caractérisé en ce que** le cœur est monté sur un carrousel (2) agencé pour entraîner en rotation le cœur inertiel autour d'un axe de pivotement (4) à au moins une fréquence de rotation prédéterminée.

2. Centrale inertielle selon la revendication 1, dans lequel l'axe de pivotement (4) coïncide avec une trisectrice des axes sensibles (X, Y, Z).

3. Centrale inertielle selon la revendication 1, dans laquelle l'axe de pivotement (4) est distinct d'une trisectrice des axes sensibles (X, Y, Z).

4. Centrale inertielle selon la revendication 3, dans laquelle l'axe de pivotement (4) est tel que les gyroscopes (9, 10, 11) aient des erreurs n'apparaissant pas à des fréquences identiques, les fréquences d'apparition des erreurs des gyroscopes n'étant pas des harmoniques les unes des autres.

5. Centrale inertielle selon la revendication 1, dans laquelle le carrousel (2) est agencé pour animer le cœur inertiel d'un mouvement de rotation continu.

6. Centrale inertielle selon la revendication 1, dans laquelle le carrousel (2) est agencé pour animer le cœur inertiel d'un mouvement de rotation alterné.

7. Centrale inertielle selon la revendication 1, dans laquelle le carrousel (2) est positionné pour que l'axe de pivotement (4) soit vertical.

8. Centrale inertielle selon la revendication 1, dans laquelle le carrousel (2) est positionné pour que l'axe de pivotement (4) soit horizontal.

9. Procédé de mesure angulaire au moyen d'une centrale inertielle conforme à l'une quelconque des revendications précédentes, le procédé comprenant les étapes de :
- faire pivoter le carrousel (2) autour de l'axe de pivotement (4),
- effectuer des mesures avec chaque gyroscope (9, 10, 11) pendant le pivotement du carrousel.

10. Procédé selon la revendication 9, dans lequel une opération de mesure est effectuée en continu pendant le pivotement.

11. Procédé selon la revendication 9, dans lequel, l'axe de pivotement (4) étant tel que les gyroscopes (9, 10, 11) aient des erreurs n'apparaissant pas à des fréquences identiques et les fréquences d'apparition des erreurs des gyroscopes n'étant pas des harmoniques les unes des autres, est réalisée une étape d'affectation des erreurs aux gyroscopes en fonction de la fréquence d'apparition de celles-ci.

## Patentansprüche

1. Inertiale Messeinheit, umfassend einen Trägheitskern (3), der mit einer Steuereinheit (50) verbunden ist und der drei Gyroskope (9, 10, 11) umfasst, die relativ zueinander derart angebracht sind, dass sie empfindliche Achsen (X, Y, Z) haben, die im Wesentlichen senkrecht zueinander sind, wobei die Gyroskope schwingende achsensymmetrische Gyroskope mit halbkugelförmigem Resonator sind, **dadurch gekennzeichnet, dass** der Kern auf einem Kreisförderer (2) montiert ist, der ausgebildet ist, um den Trägheitskern mit mindestens einer vorbestimmten Drehfrequenz drehend um eine Drehachse (4) anzutreiben.

2. Inertiale Messeinheit nach Anspruch 1, bei der die Drehachse (4) mit einer Trisektrix der empfindlichen Achsen (X, Y, Z) zusammenfällt.

3. Inertiale Messeinheit nach Anspruch 1, bei der die Drehachse (4) von einer Trisektrix der empfindlichen Achsen (X, Y, Z) verschieden ist.

4. Inertiale Messeinheit nach Anspruch 3, bei der die Drehachse (4) derart ist, dass die Gyroskope (9, 10, 11) Fehler haben, die nicht bei identischen Frequenzen auftreten, wobei die Frequenzen des Auftretens der Fehler der Gyroskope keine Harmonischen voneinander sind.

5. Inertiale Messeinheit nach Anspruch 1, bei der der Kreisförderer (2) derart ausgebildet ist, dass er den Trägheitskern in eine kontinuierliche Drehbewegung versetzt.

6. Inertiale Messeinheit nach Anspruch 1, bei der der Kreisförderer (2) derart ausgebildet ist, dass er den Trägheitskern in eine wechselnde Drehbewegung versetzt.

7. Inertiale Messeinheit nach Anspruch 1, bei dem der Kreisförderer (2) so positioniert ist, dass die Drehachse (4) vertikal ist.

8. Inertiale Messeinheit nach Anspruch 1, bei dem der Kreisförderer (2) so positioniert ist, dass die Drehachse (4) horizontal ist.

9. Verfahren zur Winkelmessung mittels einer inertialen Messeinheit nach einem der vorhergehenden Ansprüche, wobei das Verfahren die Schritte umfasst:
- Drehen des Kreisförderers (2) um die Drehachse (4),
- Durchführen von Messungen mit jedem Gyroskop (9, 10, 11) während der Drehung des Kreisförderers.

10. Verfahren nach Anspruch 9, bei der ein Messvorgang kontinuierlich während des Drehens erfolgt.

11. Verfahren nach Anspruch 9, bei der unter Berücksichtigung, dass die Drehachse (4) derart ist, dass die Gyroskope (9, 10, 11) Fehler haben, die nicht bei identischen Frequenzen auftreten, und die Frequenzen des Auftretens der Fehler der Gyroskope keine Harmonischen voneinander sind, ein Schritt der Zuordnung der Fehler zu den Gyroskopen in Abhängigkeit von der Frequenz des Auftretens derselben durchgeführt wird.

## Claims

1. An inertial unit comprising an inertial core (3) that is connected to a control unit (50) and that includes three gyros (9, 10, 11) that are mounted relative to one another so as to have sensing axes (X, Y, Z) that are substantially perpendicular to one another, the gyros being vibrating axisymmetric gyros with hemispherical resonators, the unit being **characterized in that** the core is mounted on a carousel (2) arranged to drive the inertial core in rotation about an axis of rotation (4) at at least one predetermined frequency of rotation.

2. An inertial unit according to claim 1, wherein the axis of rotation (4) coincides with a trisector of the sensing axes (X, Y, Z).

3. An inertial unit according to claim 1, wherein the axis of rotation (4) is distinct from a trisector of the sensing axes (X, Y, Z).

4. An inertial unit according to claim 3, wherein the axis of rotation (4) is such that the gyros (9, 10, 11) have errors that appear at frequencies that are not identical, and the frequencies at which gyro errors appear are not harmonics of one another.

5. An inertial unit according to claim 1, wherein the carousel (2) is arranged to cause the inertial core to perform continuous rotary motion.

6. An inertial unit according to claim 1, wherein the carousel (2) is arranged to cause the inertial core to perform alternating rotary motion.

7. An inertial unit according to claim 1, wherein the carousel (2) is positioned so that the axis of rotation (4) is vertical.

8. An inertial unit according to claim 1, wherein the carousel (2) is positioned so that the axis of rotation (4) is horizontal.

9. An angle-measurement method making use of an inertial unit in accordance with any preceding claim, the method comprising the steps of:
• causing the carousel (2) to rotate about the axis of rotation (4); and
• taking measurements with each gyro (9, 10, 11) during rotation of the carousel.

10. A method according to claim 9, wherein a measurement operation is performed continuously during rotation.

11. A method according to claim 9, wherein the axis of rotation (4) is such that the gyros (9, 10, 11) have errors that appear at frequencies that are not identical and the frequencies at which the gyro errors appear are not harmonics of one another, and wherein a step is performed of allocating errors to the gyros as a function of the frequencies at which the errors appear.
